# EUROPÄISCHE PATENTSCHRIFT

(11) **EP 2 683 958 B1**
(45) Veröffentlichungstag und Bekanntmachung des Hinweises auf die Patenterteilung: **24.04.2019**
(21) Anmeldenummer: 12714547.2
(22) Anmeldetag: 01.03.2012
(51) Int. Cl.: F16C 17/22, F16C 17/26, F04D 29/041, F04D 29/047

(54) **HYDRODYNAMISCHES GLEITLAGER, INSBESONDERE EINER MAGNETKUPPLUNGSPUMPE**
HYDRODYNAMIC PLAIN BEARING, IN PARTICULAR OF A MAGNETICALLY COUPLED PUMP
PALIER LISSE HYDRODYNAMIQUE, NOTAMMENT D'UNE POMPE À ENTRAÎNEMENT MAGNÉTIQUE

(30) Priorität: 11.03.2011 DE 102011013830
(43) Veröffentlichungstag der Anmeldung: 15.01.2014
(73) Patentinhaber: Ruhrpumpen GmbH, 58453 Witten (DE)
(72) Erfinder: SCHNEIDER, Günther, 44627 Herne (DE); WESTIB, Michael, 44879 Bochum (DE); KOEP, Dirk, 45699 Herten (DE)
(74) Vertreter: Wettlaufer, Frank
(86) Internationale Anmeldenummer: PCT/DE2012/000207
(87) Internationale Veröffentlichungsnummer: WO 2012/122964

(56) Entgegenhaltungen:
- EP-A1- 0 771 956
- EP-B1- 0 814 275
- DE-U1- 29 500 108

## Beschreibung

Die Erfindung betrifft ein hydrodynamisches Gleitlager einer Welle einer Magnetkupplungspumpe, wobei das Gleitlager eine zwischen Lagerhülsen angeordnete Spannhülse aufweist, wobei die Lagerhülsen mit ihrer Lagerstirnseite jeweils an einem Axiallager gelagert sind.

Magnetkupplungspumpen sind allgemein bekannt, und zum Beispiel in der DE 10 2009 022 916 A1 beschrieben. Dabei wird die Pumpenleistung von einer Antriebswelle aus über einen Magnet tragenden Rotor (Außenrotor) berührungsfrei und im Wesentlichen schlupflos auf den pumpenseitigen Magnetträger (Innenrotor) übertragen. Der Innenrotor treibt die Pumpenwelle an, welche in einer vom Fördermedium geschmierten Gleitlagerung, also in einer hydrodynamischen Gleitlagerung gelagert ist. Zwischen dem Außenrotor und dem Innenrotor, also zwischen den Außen- und den Innenmagneten liegt der Spalttopf mit seiner zylindrischen Wand. Der Spalttopf ist mit seinem Flansch mit einer Pumpenkomponente, beispielsweise einem Gehäusedeckel verbunden, und weist gegenüberliegend dazu einen geschlossenen Boden auf. Der Spalttopf, also die Magnetkupplungspumpe trennt zuverlässig den Produktraum von der Umwelt, so dass die Gefahr eines Produktaustrittes mit allen damit verbundenen negativen Konsequenzen ausgeschlossen werden kann. Eine Magnetkupplungspumpe ist demnach die Kombination aus einer konventionellen Pumpenhydraulik mit einem magnetischen Antriebssystem. Dieses System nutzt die Anziehungs- und Abstoßungskräfte zwischen Magneten in beiden Kupplungshälften zur berührungslosen und schlupflosen Drehmomentübertragung. Besonders im Umgang mit sehr wertvollen oder sehr gefährlichen Stoffen birgt die Magnetkupplungspumpe demnach große Vorteile.

Die EP 0 814 275 B1 beschäftigt sich mit einem hydrodynamischen Gleitlager einer Magnetkupplungspumpe, welches als kombiniertes Axial- und Radiallager ausgebildet ist. Das Gleitlager der EP 0 814 275 B1 weist zwei Lagerhülsen, zwei auf den Lagerhülsen gleitbaren Lagerbüchsen, eine zwischen den Lagerhülsen angeordnete Distanzhülse und eine zwischen den Lagerbüchsen angeordnete Distanzbüchse auf. Die Lagerhülsen und -büchsen sind aus einem keramischen Werkstoff gebildet, wobei die Distanzhülse bzw. -büchse aus einem Metall gebildet ist. Um ein hydrodynamisches Gleitlager zu schaffen, welches kostengünstig herstellbar sein soll und so ausgeführt sein soll, dass jederzeit genügend Schmierung durch das zu fördernde Medium in das Gleitlager gelangt, schlägt die EP 0 814 275 B1 * vor, dass der Innendurchmesser der Lagerhülsen größer ist als der Innendurchmesser der Distanzhülse. Die EP 0 814 275 B1 offenbart, dass die Lagerhülse radial im kalten Zustand über den L-Ring der Distanzhülse zentriert wird. Im warmen Zustand wird die Zentrierung über die Ausdehnung der Welle von den Lagerhülsen übernommen. Nachteilig ist dabei anzusehen, dass sich Partikel, z.B. Schmutzpartikel zwischen der Welle und der keramischen Lagerhülse sammeln können, so dass die Gefahr besteht, dass die Lagerhülsen bei einer thermischen Ausdehnung zerstört bzw. gesprengt werden könnten.

Weiterhin offenbart EP 0 771 956 A1 ein gattungsgemäßes hydrodynamisches Gleitlager.

Bekannt sind demnach hydrodynamische Gleitlager, deren Komponenten aus artfremden Werkstoffen gebildet sind, wobei z.B. die Lagerhülsen aus einer Keramik, z.B, aus einem gesinterten Siliziumkarbid und die Spannhülse bzw. die Distanzhülse aus einem Metall, z.B. aus einem Edelstahl besteht. Die Werkstoffe weisen jedoch unterschiedliche Eigenschaften auf, die es zu beachten gilt, wobei z.B. unterschiedliche (thermische) Ausdehnungskoeffizienten zu erwähnen sind. Insofern können bei thermischer Beanspruchung der Metall-Keramik-Verbindung Verspannungen auftreten, wobei sich die metallischen Verbindungspartner mehr ausdehnen als der keramische Verbindungspartner. Die thermisch bedingte, unterschiedliche axiale Ausdehnung kann kompensiert werden, indem z.B. flexible Elemente, wie beispielsweise Flachdichtungen als thermische Ausgleichselemente verwendet werden. Eine radiale Zentrierung kann z.B. über Toleranzringe erfolgen. Nachteilig bei dieser Verbindung ist allerdings die unzureichende Kompressibilität und Dauerelastizität der flexiblen Werkstoffe (axial) und der Toleranzringe (radial), welche über die Zeit, also Betriebsdauer zur Ermüdung des Materials führt. Das Gleitlager wird bei der Montage vorgespannt. Durch die thermische Ausdehnung ist ein Lösen der axialen Verspannung, insbesondere zwischen dem Laufrad und dem inneren Magnetrotor zu befürchten. Schon bei geringer axialer Belastung hinter dem Laufrad kommt es zur axialen Spaltvergrößerung im Kraftschluss zwischen dem Laufrad und den keramischen Lagerscheiben. In Folge taumelt das Laufrad. Dies führt zu Schwingungen und außergewöhnlichen mechanischen Belastungen, die zur Beschädigung der Verbindung Laufrad/Welle führen können (z.B. Schwingungsbruch). Zu befürchten ist aber auch eine Zerstörung des keramischen Bauteils, wenn schädliche Spannungsübergänge und/oder Spannungsspitzen auftreten, was zum Beispiel bei einem Verkanten der aneinander liegenden Stirnseiten möglich ist.

Der Erfindung liegt die Aufgabe zugrunde, ein hydrodynamisches Gleitlager der Eingangs genannten Art mit einfachen Mitteln zu verbessern bzw. zu schaffen, bei welchem zumindest die vorgenannten Nachteile vermieden sind, wobei ein thermischer Dehnungsausgleich bei gleichzeitiger Zentrierung, also ein steter Rundlauf trotz unterschiedlicher Werkstoffe sichergestellt werden soll.

Erfindungsgemäß wird die Aufgabe durch ein hydrodynamisches Gleitlager mit den Merkmalen des Anspruchs 1 gelöst.

Die Beschreibung charakterisiert und spezifiziert die Erfindung insbesondere im Zusammenhang mit den Figuren zusätzlich.

Gemäß der Erfindung wird ein hydrodynamisches Gleitlager einer Welle einer Magnetkupplungspumpe vorgeschlagen, welches eine zwischen Lagerhülsen angeordnete Spannhülse aufweist, wobei die Lagerhülsen mit ihrer Lagerstirnseite jeweils an einem Axiallager gelagert sind. Zielführend ist vorgesehen, dass die Lagerhülse und die Spannhülse an ihren jeweils aneinander liegenden Stirnseiten einen jeweils korrespondierend ausgeführten sphärischen Bereich als kugelartige Oberfläche und korrespondierende Vertiefung aufweisen, welche sphärischen Bereiche ineinander greifen. Erfindungsgemäß ist der sphärische Bereich der Lagerhülse mit seinem Zenit bezogen auf eine Mittelachse der Lagerhülse versetzt angeordnet.

In bevorzugter Ausgestaltung ist vorgesehen, dass die jeweilige Lagerhülse an der betreffenden Stirnseite eine sphärische, also kugelartig ausgeführte Oberfläche aufweist, wobei die Spannhülse dann die entsprechend ausgeführte, sphärische Vertiefung aufweist. Natürlich kann auch vorgesehen sein, die sphärische, also kugelartige Oberfläche jeweils an den Stirnseiten der jeweiligen Spannhülse anzuordnen, wobei die korrespondierende Vertiefung dann natürlich an der betreffenden Stirnseite der Lagerhülse angeordnet wäre.

In weiter bevorzugter Ausgestaltung weist die Lagerhülse an ihrer betreffenden Stirnseite den sphärisch ausgeführten Bereich aufweist, an dem Übergangsbereiche, also ein innerer Übergangsbereich und ein äußerer Übergangsbereich in Richtung zum Innen- bzw. Außenumfang der Lagerhülse angeordnet sind. Der Innenumfang der Lagerhülse ist in Richtung zur Welle orientiert, wobei der Au-ßenumfang gegenüberliegend dazu angeordnet ist, bevorzugt in Richtung einer Lagerbuchse orientiert ist. Der innere Übergangsbereich ist leicht geneigt von der Innenumfangsoberfläche wegorientiert verlaufend ausgeführt, und schließt sich an den sphärischen Bereich an. Der äußere Übergangsbereich ist gegenläufig dazu von dem sphärischen Bereich an der Außenumfangsoberfläche mündend ausgeführt. Die kugelartige Oberfläche, also der sphärische Bereich ist mit seinem Zenit bezogen auf eine Mittelachse der Lagerhülse bevorzugt außermittig angeordnet bzw. nach außen versetzt. Bevorzugt ist weiter, wenn der innere Übergangsbereich einen größeren Erstreckungsbetrag aufweist als der äußere Übergangsbereich. Die betreffende Stirnseite der Lagerhülse weist so den sphärischen Bereich auf, welcher so quasi als kugelartiger Abschnitt ausgeführt ist, wobei die betreffende Stirnseite noch die quasi konusartig verlaufenden Übergangsbereiche aufweist. Natürlich kann der Zenit auch zentrisch, also deckungsgleich zur Mittelachse angeordnet sein, was natürlich eine entsprechend angepasste Ausgestaltung der Übergangsbereiche bedeutet.

Vorteilhaft wird aufgrund der sphärischen Ausgestaltung, bzw. aufgrund der quasi kugelabschnittsartigen Ausgestaltung der zur Vertiefung orientierten Oberfläche erreicht, dass bei mechanischer Vorspannung der keramisch-metallischen Verbindung und/oder bei thermischer Ausdehnung der metallischen Komponente z.B. eine Kantenbelastung vermieden wird. Stattdessen werden schädliche Spannungsübergänge und/oder Spannungsspitzen vermieden. Zudem wird auch bei thermischer Beanspruchung bzw. bei Druckbeanspruchung vorteilhaft erreicht, dass durch die kugelabschnittsartige Anlage in der korrespondierenden Vertiefung stets eine quasi zentrierte Montagelage sichergestellt ist. Insbesondere wird die artungleiche Verbindung der metallischen und keramischen Verbindungspartner einfacher herzustellen sein, da die sphärische Ausgestaltung gleichmäßige Spannungsübergänge ermöglicht, wobei stets eine punktartige oder linienartige Belastung vermieden ist, wobei stattdessen eine über die Kugeloberfläche erzeugte gleichmäßige Flächenbelastung erreicht wird.

Vorteilhaft ist auch, dass die Spannhülse mit der zielführenden sphärischen Ausgestaltung an ihren Stirnseiten im Betriebszustand an der korrespondierenden sphärischen Ausgestaltung der jeweiligen Stirnseite der Lagerhülse abrollt, ohne diese radial oder axial zu belasten.

Möglich ist, dass die Lagerhülse aus einer gesinterten Keramik (z.B. gesintertes Siliziumkarbid; SSiC) gebildet ist. Die betreffende Stirnseite mit ihrer zielführenden Ausgestaltung kann bei der Herstellung der Lagerhülse gleichzeitig mit eingesintert werden, oder nachträglich hergestellt, bzw. angeformt werden. Die Spannhülse kann aus einem metallischen oder nicht-metallischen Werkstoff gebildet sein.

In bevorzugter Ausgestaltung weist die Spannhülse an zumindest einer ihrer Längsseiten zumindest eine Eindrehung, bevorzugt eine äquatoriale Eindrehung auf.

Eindrehungen im Sinne der Erfindung sind Materialausnehmungen, welche von einem Außenumfang in Richtung zu einem Innenumfang oder von einem Innenumfang in Richtung zu einem Außenumfang geführt sind, ohne durchgängig zu sein. Durch die Eindrehung erhält die Spannhülse eine gewisse Anpassbarkeit bzw. Flexibilität, wobei die Spannhülse bei der Montage unter Vorspannung verspannt wird, wobei unter thermischer Einwirkung bedingte Dehnungen von der Spannhülse kompensiert werden. Sind die Eindrehungen mit ihrer Mittelachse senkrecht zu einer ebenen Oberfläche angeordnet, stellt dies im Sinne der Erfindung eine äquatoriale Eindrehung dar. Natürlich können die Eindrehungen mit ihrer Mittelachse auch winklig zur ebenen Oberfläche vorgesehen sein.

Die Spannhülse weist also einen Innenumfang und einen dazu gegenüberliegenden Außenumfang auf. Mit dem Innenumfang ist die Spannhülse in Richtung zur Welle bzw. in Richtung zur Magnetkupplungspumpenwelle orientiert. Zielführend ist vorgesehen, dass die Spannhülse mehrere Eindrehungen hat. In bevorzugter Ausführung kann vorgesehen sein, jeweils eine Eindrehung jeweils in einem Stirnseitenbereich der Spannhülse einzubringen, welche schlitzartig ausgeführt sein können. Die beispielhaft schlitzartigen Eindrehungen können von dem Innenumfang in Richtung zum Außenumfang in die Spannhülse eingebracht sein.

In weiter bevorzugter Ausgestaltung kann vorgesehen sein, dass die Spannhülse eine Eindrehung aufweist, welche mittig in die Spannhülse eingebracht ist. Günstig ist, wenn diese mittige Eindrehung von dem Innenumfang in Richtung zum Außenumfang in die Spannhülse, also bevorzugt gleichorientiert wie die stirnseitigen Eindrehungen in die Spannhülse eingebracht ist. Beispielsweise können die stirnseitigen Eindrehungen schmaler sein als die mittig angeordnete Eindrehung.

In weiter günstiger Ausgestaltung kann vorgesehen sein zwischen den jeweils stirnseitigen Eindrehungen und der mittigen Eindrehung noch Zwischeneindrehungen vorzusehen, welche von dem Außenumfang in Richtung zum Innenumfang in die Spannhülse, also entgegengesetzt orientiert zu den stirnseitigen und der mittigen Eindrehung in die Spannhülse eingebracht sind.

Zweckmäßig ist, wenn die im Stirnseitenbereich angeordneten Eindrehungen beispielhaft schlitzartig mit einem bevorzugt verrundeten Schlitzgrund ausgeführt sind. Die mittige Eindrehung kann im Schnitt gesehen U-förmig mit einem Basissteg und zwei U-Schenkeln ausgeführt sein, wobei die U-Schenkel senkrecht zu der Basis angeordnet sein können. Bevorzugt kann vorgesehen sein, die Zwischeneindrehungen quasi U-förmig auszuführen, wobei sich die U-Schenkel voneinander wegorientiert in einem stumpfen Winkel zur Basis angeordnet sind, so dass eine sich von dem Basissteg in Richtung zum Außenumfang konusförmig erweiternde Materialausnehmung gebildet ist. Natürlich soll die beispielhaft genannte, geometrische Ausgestaltung der Eindrehungen und Materialausnehmungen nicht beschränkend wirken. Insbesondere ist die Abfolge und Anzahl der Eindrehungen lediglich beispielhaft.

Die vorteilhaft ausgeführte Spannhülse kann vorteilhaft thermische Dehnungen ausgleichen. Besonders zielführend ist, wenn die Spannhülse noch die zuvor beschriebene sphärische Ausgestaltung an ihren Stirnseiten aufweist. In besonders bevorzugter Ausgestaltung weist die Spannhülse an ihren Stirnseiten jeweils die zur sphärischen Oberfläche der zugeordneten Stirnseite der Lagerhülse korrespondierend ausgeführte sphärische Vertiefung auf.

In besonders bevorzugter Ausführung besteht die Spannhülse aus einem metallischen oder nicht-metallischen Werkstoff, insbesondere aus einem hochwarmfesten Edelstahl oder mit ähnlichen physikalischen Materialeigenschaften. Denkbar sind auch Duplexstähle oder Federstähle.

In bevorzugter Ausgestaltung weist das Axiallagerelement eine an die Lagerhülse angepasste Ausnehmung auf.

Zweckmäßig ist, wenn die Ausnehmung stufenartig, also quasi L-förmig mit einem Hochsteg und einem Längssteg ausgeführt ist. Der Hochsteg erstreckt sich von einem zur Welle orientierten Innenumfang in Richtung zum gegenüberliegenden Außenumfang. An dem Hochsteg schließt sich der Längssteg an, welcher sich in Richtung zu einer inneren Stirnseite der Lagerscheibe erstreckt.

Die Ausnehmung in der bevorzugten stufenartigen Ausgestaltung ist in ihrer Dimension, insbesondere in dem Erstreckungsbetrag des Hochstegs an eine radiale Ausgestaltung der Lagerhülse angepasst, so dass die Lagerhülse mit ihrer Lagerstirnseite an dem Hochsteg der Lagerscheibe, und mit ihrem entsprechenden Au-ßenumfangsabschnitt an dem Längssteg anliegt. Die Lagerhülse ist mit ihrem entsprechenden Stirnseitenabschnitt also quasi in der Lagerscheibe aufgenommen.

Die Lagerhülse ist aus einem keramischen Werkstoff, beispielsweise aus einem gesinterten Siliziumkarbid (SSiC) gebildet. In bevorzugter Ausgestaltung ist die Lagerscheibe, also das Axiallagerelement aus einem dazu artgleichen Werkstoff, also beispielsweise auch aus einem gesinterten Siliziumkarbid gebildet. Dies ist vorteilhaft, da so beide Bauteile dieselben Eigenschaften, insbesondere bezügliche des thermischen Ausdehnungskoeffizienten haben. Die Lagerscheibe bildet das Axiallagerelement.

Um noch reibungserhöhende Maßnahmen treffen zu können, kann vorgesehen sein, das Axiallagerelement und/oder die Lagerhülse stirnseitig mit einer reibungserhöhenden Beschichtung zu versehen. Zweckmäßig ist dabei, wenn die Beschichtung der Lagerhülse an der Lagerstirnseite zur Lagerscheibe bzw. zum Axiallagerelement, oder an dem Hochsteg der Lagerscheibe bzw. des Axiallagerelementes vorgesehen ist, wobei die Beschichtung an den harten Keramikwerkstoff angepasst sein sollte. Günstig ist, hier eine Diamantbeschichtung vorzusehen. Möglich ist auch eine Beschichtung an der Lagerscheibe, also an dem Axiallagerelement, bzw. an dessen Kontaktbereich zu einem Lagerscheibenaufnahmeelement bzw. zu einer Axiallagerfassung. Obwohl das Lagerscheibenaufnahmeelement bzw. die Axiallagerfassung aus einem bezogen auf den keramischen Werkstoff weicheren Werkstoff gebildet sein kann, kann bevorzugt eine Diamantbeschichtung vorgesehen sein.

Mit der Erfindung wird so vorteilhaft eine Zentrierung in axialer und radialer Richtung durch die vorteilhaft ausgeführte keramische Lagerscheibe (Axiallagerelement), die sphärische Ausgestaltung der Lagerhülse zusammen mit der sphärischen Ausführung der vorgespannten Spannhülse erreicht, welche noch die besonders quasi wellenförmige Ausgestaltung mit den beispielhaft genannten Eindrehungen haben kann. Die materialbedingte thermische Ausdehnungdifferenz zwischen den unterschiedlichen Werkstoffen (SSiC und Edelstahlwelle) gleicht die vorgespannte Spannhülse so aus. Die Spannhülse dient im kalten Zustand als Drehmoment begrenzendes Element und gleicht im Betriebszustand (warm) die Längenausdehnung der Welle über die Vorspannung aus.

Die Vorspannung der Spannhülse dient dabei dem Kraftschluss zwischen den rotierenden Teilen wie z.B. Laufrad, Lagerscheiben, Lagerhülsen, Welle, innerer Magnetrotor und der Spannhülse selbst. Die Vorspannung wird dabei bevorzugt so gewählt, dass der Kraftschluss für die Übertragung der Reibmomente auch unter thermischen Einfluss optimal aufrechterhalten bleibt. Die besondere, beispielhaft genannte, quasi wellenförmige Ausgestaltung der Spannhülse erzwingt unter Vorspannung im kalten Zustand eine (radiale) Deformierung der Spannhülse nach innen, wobei sich die Spannhülse auf der Welle abstützt und die radiale Führung der Gleitlagerung übernimmt. Unter thermischem Einfluss gleicht die vorgespannte Spannhülse dann die materialbedingten, thermischen Längenausdehnungsdifferenzen zwischen den unterschiedlichen Werkstoffen, also zwischen den SSiC-Komponenten und der Edelstahlwelle (SSiC-Edelstahl = ca: 1:4) axial und radial aus. So wird mit der Erfindung stets ein Kraftschluss auch unter unterschiedlichen thermischen Einfluss (unterschiedliche Temperaturen) gewährleistet. Wie bereits angeführt "rollt" die Spannhülse an den Lagerhülsen durch die korrespondierende sphärische Ausgestaltung der betreffenden Stirnseiten ab, ohne die Lagerhülse zu belasten. Unter thermischem Einfluss verändert sich der Wellendurchmesser und deren Länge, was soweit bekannt ist. Die radiale Zentrierung erfolgt mit der Erfindung dabei über die vorgespannte Spannhülse welche von der sich ausdehnenden Welle unter Beibehaltung der Vorspannung quasi aus einem taillierten Zustand in eine zylindrische Grundposition gedrückt wird. Dieses quasi erzwungene nach außen drücken der Spannhülse in die zylindrische Grundposition gleicht die Längenausdehnungsdifferenz der Welle zu den sich nicht oder nur gering ausdehnenden keramischen Lagerpartnern aus. Mit der Erfindung kann so vorteilhaft auf im Stand der Technik verwendete statische, elastische Weichteile wie z.B. Dichtungsmaterial zum axialen Dehnungsausgleich verzichtet werden, wobei jederzeit ein Rundlauf, also die Zentrierung unter gleichzeitiger Aufrechterhaltung der Vorspannung trotz unterschiedlicher Werkstoffe in Temperaturbereichen von beispielsweise -60°C bis +450°C gewährleistet ist. Die Erfindung ist besonders vorteilhaft zur Lagerung der Welle von Magnetkupplungspumpen einsetzbar.

Weitere vorteilhafte Ausgestaltungen der Erfindung sind in den Unteransprüchen und der folgenden Figurenbeschreibung offenbart. Es zeigen
Fig.1 eine Magnetkupplungspumpe in einer Schnittdarstellung,
Fig.2 ein hydrodynamisches Gleitlager der Magnetkupplungspumpe aus Figur 1 in einer Vergrößerung,
Fig.3 einen Ausschnitt des Gleitlagers aus Figur 2 mit einer vormontierten Spannhülse,
Fig.4 einen Ausschnitt des Gleitlagers aus Figur 2 mit einer vorgespannten Spannhülse,
Fig. 5 einen Ausschnitt des Gleitlagers aus Figur 2 unter thermischem Einfluss, und
Fig. 6 einen Ausschnitt des Gleitlagers aus Figur 2 zur Ausgestaltung der Lagerscheibe.

In den unterschiedlichen Figuren sind gleiche Teile stets mit denselben Bezugszeichen versehen, weswegen diese in der Regel auch nur einmal beschrieben werden.

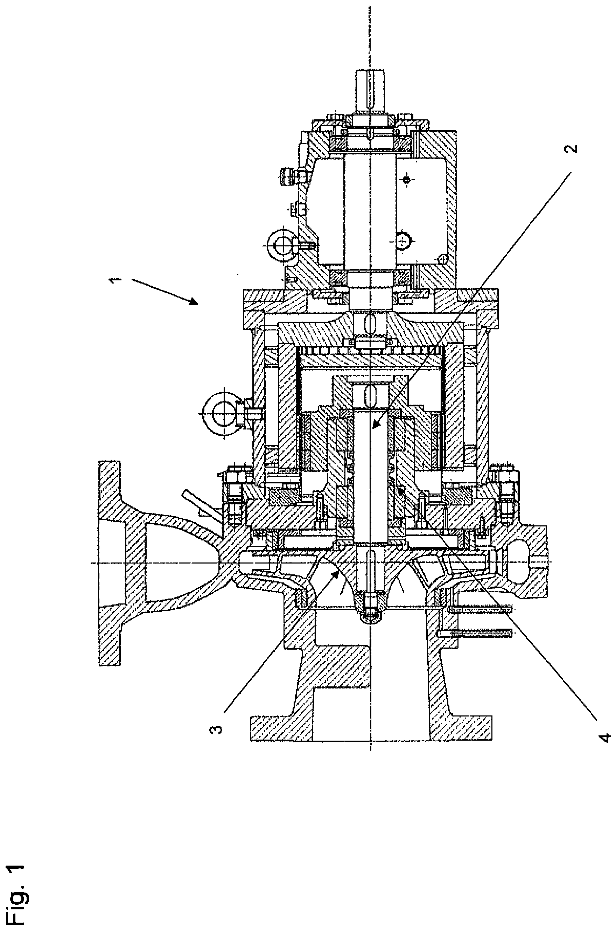

Figur 1 zeigt eine Magnetkupplungspumpe 1 mit einer Pumpenwelle 2, z.B. als Edelstahlwelle 2, welche ein Laufrad 3 trägt, und welche in einem hydrodynamischen Gleitlager 4 gelagert ist, wobei das hydrodynamische Gleitlager 4 von Fördermedium, aber auch mit einem anderen, produktverträglichen Fluid extern geschmiert werden kann. Die Magnetkupplungspumpe 1 ist an sich bekannt, weswegen diese nicht näher beschrieben ist.

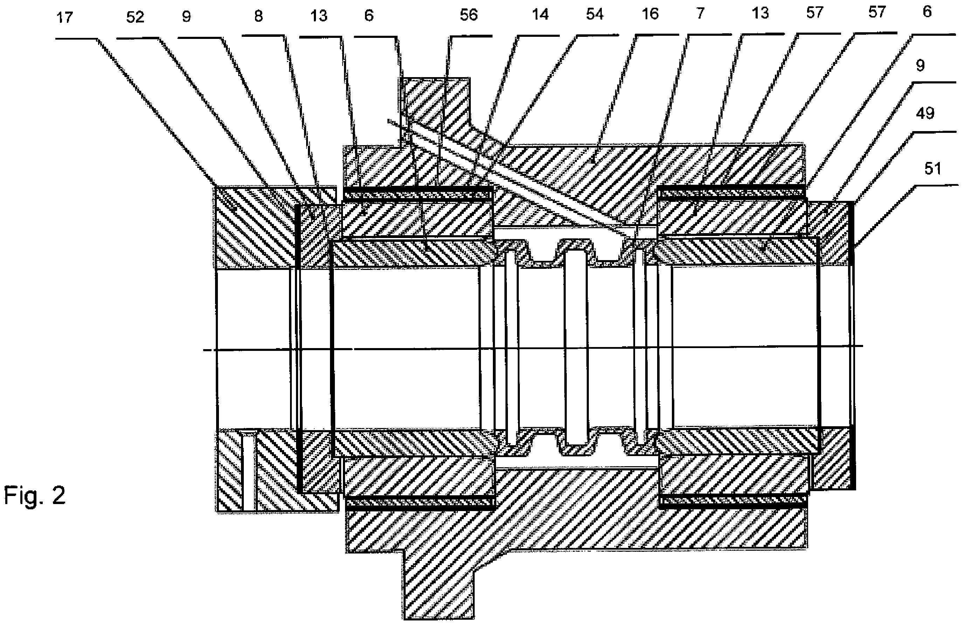

Die Erfindung zielt auf die vorteilhafte Ausgestaltung des Gleitlagers 4 der Welle 2 bzw, der Pumpenwelle 2, insbesondere der Magnetkupplungspumpe 1, wobei das hydrodynamische Gleitlager 4 eine zwischen Lagerhülsen 6 angeordnete Spannhülse 7 aufweist, wobei die Lagerhülsen 6 mit ihrer jeweiligen Lagerstirnseite 8 jeweils an einem Axiallagerelement 9 gelagert sind (Figur 2). Das Axiallagerelement 9 wird im Folgenden auch als Lagerscheibe 9 bezeichnet, wobei das hydrodynamische Gleitlager 4 im Folgenden lediglich als Gleitlager 4 bezeichnet wird.

Wie z.B. in Figur 2 erkennbar ist die Spannhülse 7 zwischen zwei Lagerhülsen 6 angeordnet. Die jeweiligen Stirnseite der Lagerhülse 6 ist in Kontakt mit den zugeordneten Stirnseiten der Spannhülse 7. Gegenüberliegend zur spannhülsenseitigen Stirnseite ist die Lagerhülse 6 mit ihrer Lagerstirnseite 8 in der Lagerscheibe 9 gelagert.

Das Gleitlager 4 weist noch Lagerbuchsen 13, Spannringe 14 sowie ein Lagergehäuse 16 auf. Die Lagerscheibe 9 ist in einer Axiallagerfassung 17, welche auch als Lagerscheibenaufnahmeelement 17 bezeichnet werden kann, gehalten.

Die Lagerhülse 6 weist an ihrer spannhülsenseitigen Stirnseite eine sphärische Ausgestaltung auf, welche mit einer korrespondierenden sphärischen Ausgestaltung der betreffenden Stirnseite der Spannhülse 7 zusammenwirkt.

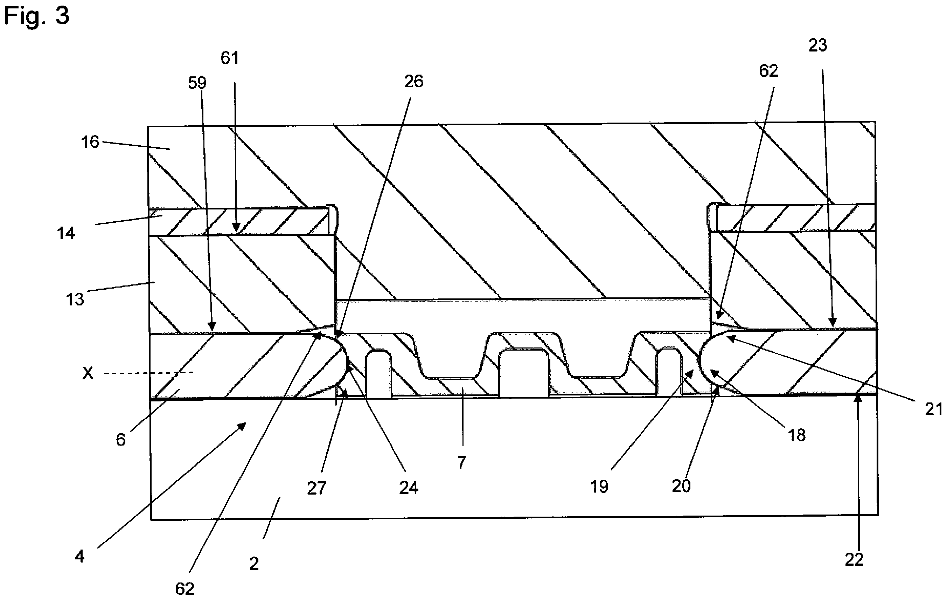

In bevorzugter Ausgestaltung weist die spannhülsenseitige Stirnseite der Lagerhülse 6 einen sphärisch ausgeführten Bereich 18, bevorzugt eine kugelabschnittsartige Oberfläche 18 auf, welche in eine korrespondierend ausgeführte, sphärische Vertiefung 19 der Spannhülse 7 eingreift, wie z.B. in Figur 3 erkennbar ist.

In weiter bevorzugter Ausgestaltung weist die Lagerhülse 6 wie in den Figuren 3 bis 5 erkennbar an ihrer spannhülsenseitigen Stirnseite den sphärisch ausgeführten Bereich 18 auf, an dem Übergangsbereiche 20, 21, also ein innerer Übergangsbereich 20 und ein äußerer Übergangsbereich 21 in Richtung zum Innen- bzw. Außenumfang 22 ,23 der Lagerhülse 6 angeordnet sind. Der Innenumfang 22 der Lagerhülse 6 ist in Richtung zur Welle 2 orientiert, wobei der Außenumfang 23 gegenüberliegend dazu angeordnet ist, bevorzugt in Richtung zu der Lagerbuchse 13 orientiert ist. Der innere Übergangsbereich 20 ist leicht geneigt von der Innenumfangsoberfläche 22 wegorientiert, in der Zeichnungsebene nach oben verlaufend ausgeführt, und schließt sich an den sphärischen Bereich 18 an. Der äußere Übergangsbereich 21 ist gegenläufig dazu von dem sphärischen Bereich 18 an der Außenumfangsoberfläche 23 mündend ausgeführt, erstreckt sich in der Zeichnungsebene wie dargestellt also auch nach oben. Bevorzugt ist weiter, wenn der innere Übergangsbereich 20 einen größeren Erstreckungsbetrag aufweist als der äußere Übergangsbereich 21. Die kugelartige Oberfläche 18, also der sphärische Bereich 18 ist mit seinem Zenit 24 demnach bezogen auf eine Mittelachse X der Lagerhülse 6 außermittig angeordnet, bzw. in der Zeichnungsebene nach oben, also nach außen versetzt.

Die lagerhülsenseitige Stirnseite der Spannhülse 7 ist korrespondierend dazu ausgeführt, wobei benachbart zur Vertiefung 19 stirnseitige Reststege 26,27 angeordnet sind. Der in der Zeichnungsebene dargestellte obere Reststeg 26 weist eine geringere Erstreckung auf als der in der Zeichnungsebene dargestellte untere Reststeg 27, so dass deren Ausführung an die Ausgestaltung der Übergangsbereiche 20 und 21 angepasst ist. Die Vertiefung 19 ist also auch außermittig angeordnet.

Durch die sphärische Ausgestaltung der ineinander greifenden Stirnseiten "rollt" die Spannhülse 7 an den Lagerhülsen 6 ab, ohne die Lagerhülse 6 zu belasten.

Die Spannhülse 7 weist in bevorzugter Ausgestaltung zumindest eine Eindrehung 28, 29, und/oder 31, besonders bevorzugt zwei stirnseitige Eindrehungen 28, eine mittige Eindrehung 29 und zwei Zwischeneindrehungen 31 auf.

Die Eindrehungen 28 bis 31 sind bevorzugt als äquatoriale Eindrehungen 28 bis 31 ausgeführt, und könne auch als Materialausnehmungen 28 bis 31 bezeichnet werden. Durch die Materialausnehmungen 28 bis 31 ist die Spannhülse 7 quasi wellenförmig ausgeführt.

Die stirnseitige Eindrehungen 28 sind in einem Stirnseitenbereich 32 der Spannhülse 7 von deren Innenumfang 33 aus in Richtung zu deren Außenumfang 34 in die Spannhülse 7 eingebracht. Die stirnseitigen Eindrehungen 28 sind schlitzartig ausgeführt, und können einen verrundeten Grund aufweisen, wobei z.B. in den Figuren 3 bis 5 eine ebene Ausgestaltung des Grundes erkennbar ist.

Die mittigen Eindrehungen 29 sind zwischen den stirnseitigen Eindrehungen 28 angeordnet, und im dargestellten Ausführungsbeispiel breiter als die stirnseitigen Eindrehungen 28. Die mittigen Eindrehungen 29 sind quasi U-förmig ausgeführt, wobei U-Schenkel 37 geneigt zur Basis 38 oder senkrecht dazu angeordnet sein können. Die mittigen Eindrehungen 29 sind von dem Innenumfang 33 aus in Richtung zu dem Außenumfang 34 in die Spannhülse 7 eingebracht. Die stirnseitigen Eindrehungen 28 sind also gleichorientiert wie die mittigen Eindrehungen 29.

Die Zwischeneindrehungen 31 sind zwischen den mittigen Eindrehungen 29 und den stirnseitigen Eindrehungen 29 angeordnet, aber von dem Außenumfang 34 der Spannhülse 7 in Richtung zu deren Innenumfang 33 eingebracht.

Wie erkennbar kann vorgesehen sein, die Zwischeneindrehungen 31 quasi U-förmig auszuführen wobei deren U-Schenkel 39 voneinander wegorientiert in einem stumpfen Winkel zur Basis 41 angeordnet sind, so dass eine sich von der Basis 41 in Richtung zum Außenumfang 34 konusförmig erweiternde Materialausnehmung gebildet ist.

Natürlich soll die beispielhaft genannte, geometrische Ausgestaltung der Eindrehungen 28 bis 31 bzw. Materialausnehmungen 28 bis 31 nicht beschränkend wirken. Insbesondere ist die Abfolge und Anzahl der Eindrehungen 28 bis 31 lediglich beispielhaft.

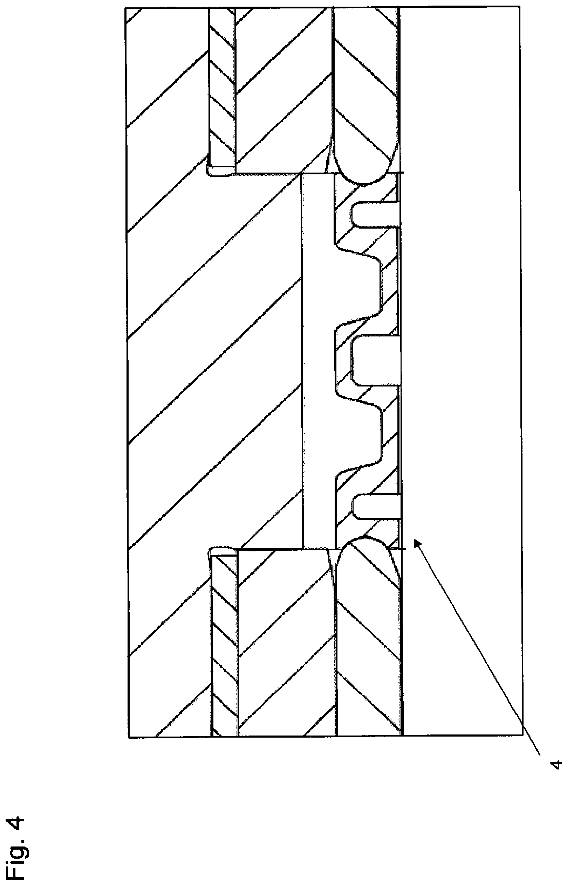

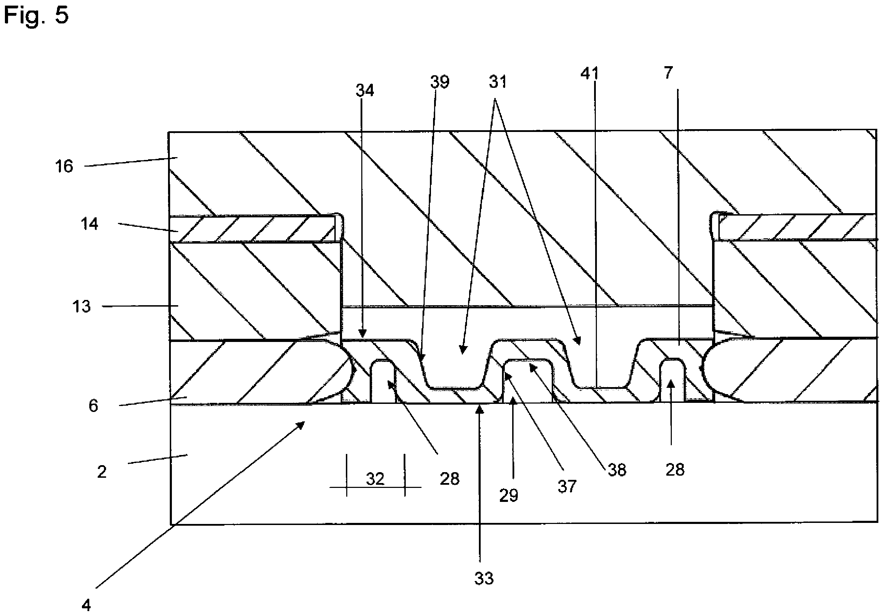

Die Bezugszeichen zur Beschreibung der sphärischen Ausgestaltung der Spannhülse 7 und Lagerhülse 6 sind in Figur 3 eingezeichnet, wobei die Bezugszeichen betreffend die Spannhülse 7 mit ihren Eindrehungen 28 bis 31 in Figur 5 eingezeichnet sind, wobei Figur 4 frei von Bezugszeichen gehalten ist, was der Übersicht dienen soll.

Bei dem in Figur 3 dargestellten Ausführungsbeispiel ist das Gleitlager 4 vormontiert, wobei die Spannhülse 7 mit Ihrem Innenumfang 33 vollständig zur Wellenoberfläche beabstandet ist.

In Figur 4 ist ein vorgespannter Zustand dargestellt, wobei der Innenumfang 33 der Spannhülse 7 im Bereich der Zwischeneindrehungen 31 Kontakt zur Wellenoberfläche hat. Die Stirnseitenbereiche 32 des Innenumfangs 33 sind zur Wellenoberfläche beabstandet.

In Figur 5 ist ein Betriebszustand dargestellt, wobei ein Temperaturbetrag von beispielsweise 320°C vorliegt. Mittels der vorteilhaft ausgeführten Spannhülse 7 wird vorteilhaft ein Ausdehnungsausgleich der Welle 2 sowohl in axialer als auch in radialer Richtung erreicht, wie in Figur 5 dargestellt. Auch die Stirnseitenbereiche 32 des Innenumfangs sind in Kontakt mit der Wellenoberfläche.

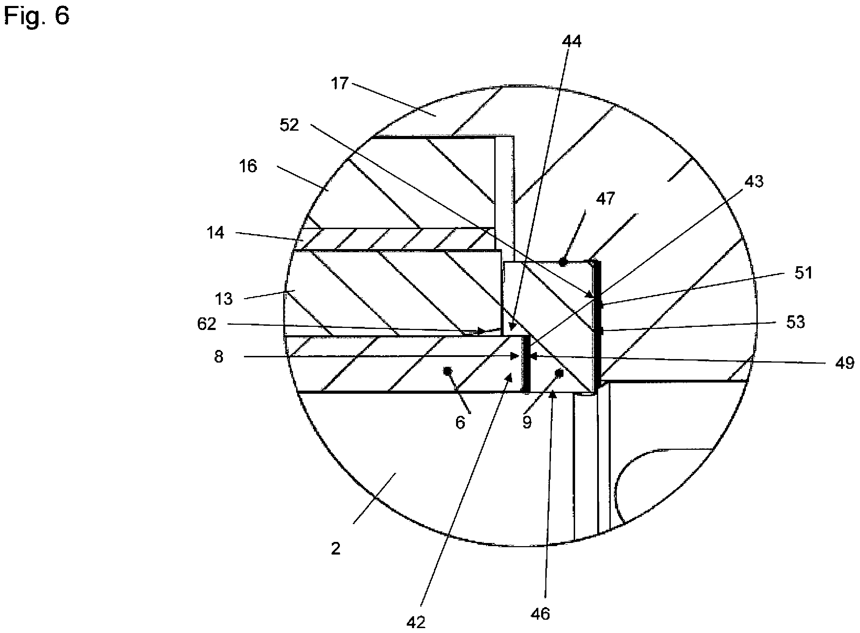

In Figur 6 ist die besondere Lagerung der Lagerhülse 6 in der Lagerscheibe 9 dargestellt.

Die Lagerscheibe 9 weist eine Ausnehmung 42 auf welche bevorzugt stufenartig ausgeführt ist. Die Ausnehmung 42 weist einen Hochsteg 43 und einen sich daran anschließenden Längssteg 44 auf. Der Hochsteg 43 ist in der Zeichnungsebene von einem Innenumfang 46 der Lagerscheibe 9 in Richtung zu einem Au-ßenumfang 47 orientiert, und geht in den Längssteg 44 über, welcher zu einer inneren Stirnseite der Lagerscheibe 9 orientiert ist. Die Innere Stirnseite der Lagerscheibe 9 kann in Kontakt mit der Lagerbuchse 13 sein, wie in Figur 6 erkennbar ist. Der Hochsteg 43 kann auch als Radialsteg bezeichnet werden. Die stufenartige Ausnehmung 42 ist so innen liegend angeordnet.

In ihrer Dimension ist die Ausnehmung 42 an die Ausgestaltung der Lagerhülse 6 in radialer Richtung aber auch in axialer Richtung angepasst, so dass die jeweilige Lagerstirnseite 8 und ein sich daran anschließender Lagerstirnseitenbereich der jeweiligen Lagerhülse 6 quasi in der Lagerscheibe 9 aufgenommen ist.

Die Lagerhülse 6 besteht beispielsweise aus einem keramischen Werkstoff, z.B. aus einem gesinterten Siliziumkarbid (SSiC). Vorteilhaft kann die Lagerscheibe aus einem keramischen Werkstoff, z.B aus dem zum Werkstoff der Lagerhülse 6 identischen Werkstoff, also z.B. aus einem gesinterten Siliziumkarbid (SSiC) bestehen. So sind thermisch bedingte Ausdehnungsunterschiede der Lagerhülse 6 zur Lagerscheibe 9 ausgeschlossen.

Möglich ist noch, reibungserhöhende Beschichtungen 49, 51 vorzusehen, wie beispielhaft in Figur 6 dargestellt.

Die reibungserhöhende Beschichtung 49 kann zwischen der lagerseitigen Stirnseite 8 der Lagerhülse 6 und dem Hochsteg 43 wirken. Die reibungserhöhende Beschichtung 49 kann entweder an der Lagerstirnseite 8 oder an dem Hochsteg 43 angeordnet sein, und bevorzugt als Diamantbeschichtung ausgeführt sein. Die reibungserhöhende Beschichtung 49, 51 kann z.B. in Form einer diamantbeschichteten Folie aufgeklebt oder als Diamantbeschichtung aufgespritzt werden, wobei die beispielhaft genannten Auftragverfahren natürlich nicht beschränkend sein sollen. Die reibungserhöhende Beschichtung 51 kann entweder an der Außenstirnseite 52 der Lagerscheibe 9 oder an der korrespondierenden Anlagefläche 53 der Axiallagerfassung 17 angeordnet sein, und ebenfalls als Diamantbeschichtung (z.B. diamantbeschichtete Folie) ausgeführt sein. Obwohl Figur 6 lediglich eine Seite darstellt gilt das Gesagte auch für die nicht dargestellte Seite des Gleitlagers 4.

Die Spannhülse 7 kann aus einem Edelstahl beispielsweise aus einem hochwarmfesten Edelstahl oder aus einem Material mit ähnlichen physikalischen Eigenschaften gebildet sein. Der Spannring 14 kann aus einem metallischen oder nichtmetallischen Werkstoff, bevorzugt aus einem metallischen Sonderwerkstoff wie z.B. aus einem Duplexstahl oder aus einem Material mit ähnlichen physikalischen Eigenschaften gebildet sein. Mögliche Materialien für den Spannring 14 können noch hochwarmfeste Edelstähle oder Federstähle sein, wobei die Spannhülse 7 noch aus Duplexstählen oder aus einem Federstahl gebildet sein kann.

In Figur 2 ist noch eine reibungserhöhende Beschichtung 57 erkennbar, welche an dem Spannring 14 bzw. an dessen Innenumfang 54 und an dessen Au-ßenumfang 56 angeordnet ist. Die reibungserhöhende Beschichtung 57 kann ebenso aus einer Diamantbeschichtung bestehen wie die Beschichtungen 49 und 51. Zwischen den Komponenten Spannring14/Lagerbuchse13 und Spannring14/Lagergehäuse16 ist bevorzugt ein doppelter Pressverbund gebildet, wobei der Spannring 14, die Lagerbuchse 13 und das Lagergehäuse 16 unter Wärmeeinfluss montiert werden und anschließend jeweils abgekühlt werden. So wird ein sehr hoher Fugendruck erreicht, welcher eine radiale Verdrehsicherung und eine axiale Verschiebesicherung gewährleistet, welcher auch unter Betriebsbedingungen, insbesondere unter Wärmeeinfluss erhalten bleibt. Mittels des vorteilhaften Mehrschichtenpressverbundes erhöht sich die radiale und axiale Belastbarkeit der Komponenten in der gesamten Einheit, also in dem hydrodynamischen Gleitlager um ein Vielfaches. Des Weiteren ist z.B. in Figuren 3 und 6 noch erkennbar, dass die Lagerbuchse 13 an ihrem Innenumfang 59 angefaste Kanten (Kantenfasen 62) aufweist. Gegenüberliegend können an dem Außenumfang 61 ebenso Kantenfasen 62 angeordnet sein. Die Kantenfasen 62 können beidseitig, also in der Zeichnungsebene an der rechten und/oder linken Stirnseite vorgesehen sein. Diese Maßnahme ist insbesondere zielführend bei dem An-. bzw. Abfahren der beispielhaften Magnetkupplungspumpe 1, da so der Kantendruck, welcher durch Taumelbewegungen der rotierenden Einheit und Einwirkungen von Radialkräften von einem Druckstutzen auf das Laufrad entstehen könnte, kompensiert werden kann. Insofern sind Kantenfasen 62 vorteilhaft um Kantenbelastungen z.B. beim An- und Abfahren der Magnetkupplungspumpe 1 z.B. durch radiale hydraulische Belastung zu vermeiden. Eine partielle bzw. punktuelle Lagerbelastung wird somit quasi ausgeschlossen.

Die beispielhaft genannten Werkstoffpaarungen der Lagerhülse 6, der Lagerscheiben 9 sowie der Lagerbuchse 13 und der Spannhülse 7 aber auch des Spannrings 14 sollen natürlich nicht beschränkend sein. Denkbar ist auch die jeweiligen Komponenten grundsätzlich aus allen geeigneten Keramiken zu bilden. Auch Wolframkarbid, Kohle, Teflon (PTFE), glasfaserverstärkte Materialien, kohlefaserverstärkte Materialien oder metallische Materialien sind als Werkstoff bzw. als Werkstoffkombinationen möglich.

### Bezugszeichenliste:

- 1: Magnetkupplungspumpe
- 2: Pumpenwelle
- 3: Laufrad
- 4: Hydrodynamisches Gleitlager
- 5:
- 6: Lagerhülse
- 7: Spannhülse
- 8: Lagerstirnseite
- 9: Axiallagerelement
- 10:
- 11:
- 12:
- 13: Lagerbuchsen
- 14: Spannringe
- 15:
- 16: Lagergehäuse
- 17: Axiallagerfassung
- 18: Sphärische Oberfläche von 11
- 19: Sphärische Vertiefung in 12
- 20: Übergangsbereich
- 21: Übergangsbereich
- 22: Innenumfang von 6
- 23: Außenumfang von 6
- 24: Zenit von 18
- 25:
- 26: Oberer Reststeg an 12
- 27: Unterer Reststeg an 12
- 28: Stirnseitige Eindrehung
- 29: Mittige Eindrehung
- 30:
- 31: Zwischeneindrehung
- 32: Stirnseitenbereich von 7
- 33: Innenumfang von 7
- 34: Außenumfang von 7
- 35:
- 36:
- 37: U-Schenkel von 29
- 38: Basis von 29
- 39: U-Schenkel von 31
- 40:
- 41: Basis von 31
- 42: Ausnehmung in 9
- 43: Hochsteg/Radialsteg
- 44: Längssteg
- 45:
- 46: Innenumfang von 9
- 47: Außenumfang von 9
- 48:
- 49: Reibungserhöhende Beschichtung
- 50:
- 51: Reibungserhöhende Beschichtung
- 52: Außenstirnseite von 9
- 53: Anlagefläche
- 54: Innenumfang von 14
- 55:
- 56: Außenumfang von 14
- 57: Reibungserhöhende Beschichtung an 14
- 58:
- 59: Innenumfang von 13
- 60:
- 61: Außenumfang von 13
- 62: Kantenfasen

## Patentansprüche

1. Hydrodynamisches Gleitlager einer Welle (2) einer Magnetkupplungspumpe (1), wobei das hydrodynamische Gleitlager (4) eine zwischen Lagerhülsen (6) angeordnete Spannhülse (7) aufweist, wobei die Lagerhülsen (6) mit ihrer Lagerstirnseite (8) jeweils an einem Axiallagerelement (9) gelagert sind, **dadurch gekennzeichnet, dass** die Lagerhülse (6) und die Spannhülse (7) an ihren jeweiligen Stirnseiten einen jeweils korrespondierend ausgeführten sphärischen Bereich (18,19) als kugelartige Oberfläche und korrespondierende Vertiefung aufweisen, welche ineinander greifen, wobei der sphärische Bereich (18) der Lagerhülse (6) mit seinem Zenit (24) bezogen auf eine Mittelachse (X) der Lagerhülse (6) versetzt angeordnet ist.

2. Hydrodynamisches Gleitlager nach Anspruch 1, **dadurch gekennzeichnet, dass** die Lagerhülse (6) an ihrer Stirnseite eine sphärische Oberfläche (18) und die Spannhülse (7) an ihrer Stirnseite eine dazu korrespondierende Vertiefung (19) aufweist.

3. Hydrodynamisches Gleitlager nach Anspruch 1 oder 2, **dadurch gekennzeichnet, dass** die Lagerhülse (6) an ihrer Stirnseite Übergangsbereiche (20,21) aufweist, welche an dem sphärischen Bereich (18) anschließen.

4. Hydrodynamisches Gleitlager einer Welle (2) nach einem der vorhergehenden Ansprüche, **dadurch gekennzeichnet, dass** die Spannhülse (7) zumindest eine Eindrehung (28,29,31) aufweist.

5. Hydrodynamisches Gleitlager nach einem der vorhergehenden Ansprüche, **dadurch gekennzeichnet, dass** die Spannhülse (7) stirnseitige Eindrehungen (28), mittige Eindrehungen (29) und/oder Zwischeneindrehungen (31) aufweist.

6. Hydrodynamisches Gleitlager nach einem der vorhergehenden Ansprüche, **dadurch gekennzeichnet, dass** die Spannhülse (7) Eindrehungen (28,29,31) aufweist, welche schlitzartig und/oder U-förmig als äquatoriale Eindrehungen (28,29,31) ausgeführt sind.

7. Hydrodynamisches Gleitlager einer Welle (2) nach einem der vorhergehenden Ansprüche, **dadurch gekennzeichnet, dass** das Axiallagerelement (9) eine an die Lagerstirnseite (8) der Lagerhülse (6) angepasste Ausnehmung (42) aufweist.

8. Hydrodynamisches Gleitlager nach einem der vorhergehenden Ansprüche, **dadurch gekennzeichnet, dass** das Axiallagerelement (9) eine stufenartige Ausnehmung (42) mit einem Hochsteg (43) und einem Längssteg (44) aufweist.

9. Hydrodynamisches Gleitlager nach einem der vorhergehenden Ansprüche, **dadurch gekennzeichnet, dass** die Lagerhülse (6) und das Axiallagerelement (9) aus einem keramischen Werkstoff, bevorzugt aus einem gesinterten Siliziumkarbid und die Spannhülse (7) aus einem Edelstahl, bevorzugt aus einem hochwarmfesten Edelstahl gebildet ist.

## Claims

1. A hydrodynamic slide bearing of a shaft (2) of a magnetic coupling pump (1), wherein the hydrodynamic slide bearing (4) comprises a clamping sleeve (7) arranged between bearing sleeves (6), wherein the bearing sleeves (6) are mounted with their bearing end face (8) in each case on an axial bearing element (9), **characterised in that** the bearing sleeve (6) and the clamping sleeve (7) comprise, at their respective end faces, a spherical region (18, 19) of respectively corresponding configuration as a spherical surface and a corresponding recess, which engage into one another, wherein the spherical region (18) of the bearing sleeve (6) with its zenith (24) is arranged offset relative to a central axis (X) of the bearing sleeve (6).

2. The hydrodynamic slide bearing according to claim 1, **characterised in that** the bearing sleeve (6), at its end face, comprises a spherical surface (18) and the clamping sleeve (7), at its end face, comprises a recess (19) corresponding thereto.

3. The hydrodynamic slide bearing according to claim 1 or 2, **characterised in that** the bearing sleeve (6), at its end face, comprises transition regions (20, 21), which adjoin the spherical region (18).

4. The hydrodynamic slide bearing of a shaft (2) according to any one of the preceding claims, **characterised in that** the clamping sleeve (7) comprises at least one turned groove (28, 29, 31).

5. The hydrodynamic slide bearing according to any one of the preceding claims, **characterised in that** the clamping sleeve (7) comprises end-face turned grooves (28), central turned grooves (29) and/or intermediate turned grooves (31).

6. The hydrodynamic slide bearing according to any one of the preceding claims, **characterised in that** the clamping sleeve (7) comprises turned grooves (28, 29, 31), which are constituted slot-like and/or U-shaped as equatorial turned grooves (28, 29, 31).

7. The hydrodynamic slide bearing of a shaft (2) according to any one of the preceding claims, **characterised in that** the axial bearing element (9) comprises a recess (42) matched to the bearing end face (8) of the bearing sleeve (6).

8. The hydrodynamic slide bearing according to any one of the preceding claims, **characterised in that** the axial bearing element (9) comprises a step-like recess (42) with a vertical web (43) and a longitudinal web (44).

9. The hydrodynamic slide bearing according to any one of the preceding claims, **characterised in that** the bearing sleeve (6) and the axial bearing element (9) are formed from a ceramic material, preferably from a sintered silicon carbide, and the clamping sleeve (7) is formed from a high-grade steel, preferably from a highly heat-resistant high-grade steel.

## Revendications

1. Palier lisse hydrodynamique d'un arbre (2) d'une pompe à accouplement magnétique (1), le palier lisse hydrodynamique (4) comportant une douille de serrage (7) placée entre des coussinets de palier (6), par leur face frontale de palier (8), les coussinets de palier (6) étant logés chacun sur un élément de palier axial (9), **caractérisé en ce que** sur leurs faces frontales respectives, le coussinet de palier (6) et la douille de serrage (7) comportent une zone sphérique (18,19) réalisée de manière respectivement correspondante, sous la forme d'une surface sphérique et d'un creux correspondant qui s'engagent l'un dans l'autre, par son zénith (24), la zone sphérique (18) du coussinet de palier (6) étant placée avec un décalage en rapport à un axe médian (X) du coussinet de palier (6).

2. Palier lisse hydrodynamique selon la revendication 1, **caractérisé en ce que** sur sa face frontale, le coussinet de palier (6) comporte une surface sphérique (18) et sur sa face frontale, la douille de serrage (7) comporte un creux (19) correspondant à celle-ci.

3. Palier lisse hydrodynamique selon la revendication 1 ou 2, **caractérisé en ce que** sur sa face frontale, le coussinet de palier (6) comporte des zones transitoires (20,21) qui se raccordent sur la zone sphérique (18).

4. Palier lisse hydrodynamique d'un arbre (2) selon l'une quelconque des revendications précédentes, **caractérisé en ce que** la douille de serrage (7) comporte au moins une gorge (28, 29, 31).

5. Palier lisse hydrodynamique selon l'une quelconque des revendications précédentes, **caractérisé en ce que** la douille de serrage (7) comporte des gorges frontales (28), des gorges centrales (29) et/ou des gorges intermédiaires (31).

6. Palier lisse hydrodynamique selon l'une quelconque des revendications précédentes, **caractérisé en ce que** la douille de serrage (7) comporte des gorges (28, 29, 31) qui sont réalisées en forme de fentes et/ou en forme de U en tant que gorges (28, 29, 31) équatoriales.

7. Palier lisse hydrodynamique d'un arbre (2) selon l'une quelconque des revendications précédentes, **caractérisé en ce que** l'élément de palier axial (9) comporte un évidement (42) adapté à la face frontale de palier (8) du coussinet de palier (6).

8. Palier lisse hydrodynamique selon l'une quelconque des revendications précédentes, **caractérisé en ce que** l'élément de palier axial (9) comporte un évidement (42) échelonné, pourvu d'une entretoise verticale (43) et d'une entretoise longitudinale (44).

9. Palier lisse hydrodynamique selon l'une quelconque des revendications précédentes, **caractérisé en ce que** le coussinet de palier (6) et l'élément de palier axial (9) sont créés en une matière céramique, de préférence en un carbure de silicium fritté et la douille de serrage (7) est créée en un acier inoxydable, de préférence en un acier inoxydable résistant à de hautes températures.
